(19) **Europäisches Patentamt**

**European Patent Office**

**Office européen des brevets**

(11) **EP 1 154 700 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.7: **A23J 3/08**, A23C 21/00, A23C 19/082, A23G 9/02, A23P 1/16

(21) Anmeldenummer: **00909004.4**

(22) Anmeldetag: **06.02.2000**

(86) Internationale Anmeldenummer:
**PCT/DE00/00367**

(87) Internationale Veröffentlichungsnummer:
**WO 00/048473 (24.08.2000 Gazette 2000/34)**

(54) **HERSTELLUNG EINES AGGREGIERTEN MOLKENPROTEINPRODUKTS UND DESSEN ANWENDUNG**

PREPARATION OF AN AGGREGATE WHEY PROTEIN PRODUCT AND ITS USE

PRODUCTION D'UN AGREGAT DE PROTEINES DE LACTOSERUM ET UTILISATION DE CET AGREGAT

(84) Benannte Vertragsstaaten:
**AT BE CH CY DE DK ES FI FR GB GR IE IT LI LU MC NL PT SE**

(30) Priorität: **16.02.1999 DE 19906379**

(43) Veröffentlichungstag der Anmeldung:
**21.11.2001 Patentblatt 2001/47**

(73) Patentinhaber:
• **Huss, Manfred**
**85414 Kirchdorf (DE)**
• **Spiegel, Thomas**
**80686 München (DE)**

(72) Erfinder:
• **Huss, Manfred**
**85414 Kirchdorf (DE)**

• **Spiegel, Thomas**
**80686 München (DE)**

(74) Vertreter: **Schrell, Andreas, Dr. et al**
**Gleiss & Grosse**
**Leitzstrasse 45**
**70469 Stuttgart (DE)**

(56) Entgegenhaltungen:
| | |
|---|---|
| **EP-A- 0 099 296** | **EP-A- 0 347 237** |
| **EP-A- 0 412 590** | **EP-A- 0 716 810** |
| **WO-A-88/08673** | **WO-A-89/05587** |
| **WO-A-91/17665** | **WO-A-92/20239** |
| **DE-A- 3 445 223** | **US-A- 4 265 924** |
| **US-A- 4 879 131** | **US-A- 5 350 590** |
| **US-A- 5 503 864** | |

EP 1 154 700 B1

**Beschreibung**

Die Erfindung betrifft ein Verfahren zur Herstellung eines Konzentrats denaturierter Molkenproteinaggregate, bevorzugt mit einer mittleren Aggregatgröße (Medianwert) im Bereich von 1 bis 4 µm, und ein mit diesem Verfahren erhältliches stabiles Schaumprodukt.

Proteine in Lebensmitteln existieren häufig nicht als lösliche Einzelmoleküle, sondern in Form von größeren Aggregaten oder Partikeln. Solche partikulären Strukturen können von Natur aus bestehen, wie bei den Kasein-Mizellen in der Milch, oder erst während des Herstellungsprozesses gebildet werden, etwa bei der Produktion von Ricotta durch Koagulation der Molkenproteine [KALAB, M. (1990) "Microparticulate protein in foods", Journal of the American College of Nutrition, 9, 374-387]. Das durch derartige Aggregate oder Partikel hervorgerufene Mundgefühl wird wesentlich von deren Größe geprägt. Teilchen, die kleiner als 0,1 µm sind, werden nicht wahrgenommen, so daß ein wässerig-leerer Eindruck entsteht [LÜTH, A. (1991): Fettreduktion mit Hilfe mikropartikulierter Proteine - ein neues Konzept zur Entwicklung von "Light-Produkten". DMZ-Lebensmittelindustrie und Milchwirtschaft, 112, 762-766].

Proteinaggregate, die im Größenbereich von emulgierten Fetttröpfchen, also etwa zwischen 0,1 und 10 µm, liegen, können ein kremig-glattes Mundgefühl hervorrufen [MILLER, M.S. (1994) "Proteins as fat substitutes" In: Protein Functionality in Food Systems (Hrsgg. HETTIARACHCHY, N.S.; ZIEGLER, G.R.), New York, Basel, Hongkong].

Größere Teilchen werden im Mund einzeln wahrgenommen und als mehlig bis sandig empfunden. Es ist allerdings nicht möglich, eine genaue Grenze der Partikelgröße zu definieren, bei der eine Rauhigkeit auftritt, da dabei auch subjektive Faktoren eine Rolle spielen. Die Angaben reichen von 3 bis 40 µm. Andere Eigenschaften der Partikel, wie Form, Deformierbarkeit und Oberflächenstruktur, spielen ebenso eine Rolle wie die Beschaffenheit des Umgebungsmilieus, insbesondere dessen Viskosität (MILLER, a.a.O.).

Aus FR-A 1 453 815 ist ein Verfahren zur Wiedergewinnung der im Lactoserum nach Durchführung der Milchgerinnung (Koagulation) in der Molke verbleibenden Proteine bekannt, bei dem die Molke zunächst auf einen pH-Wert zwischen 4,6 und 7,0, im Beispielsfalle auf einen pH-Wert von 4,65, eingestellt wird und anschließend auf eine Temperatur zwischen 70°C und 100°C, im Beispielsfalle 90°C, erwärmt wird, um die Proteine auszufällen. Danach werden die ausgefällten Proteine mittels einer Zentrifugation abgetrennt. Über die Größe der dabei erhaltenen Proteinaggregate werden in dieser Druckschrift allgemein keine Angaben gemacht. Bei dem in dem Beispielsfalle verwendeten pH-Wert von 4,65, ist der Anteil der Proteinaggregate in der gewünschten Größenordnung zur Erzielung eines kremigglatten Mundgefühls jedoch gering und die Ausbeute des Verfahrens in dieser Hinsicht deshalb schlecht.

VISSER und BAKKER (EP-A 0 347 237) beschreiben ein Verfahren, bei dem Molkenproteine in geringen Ausgangskonzentrationen bei Temperaturen unterhalb von 100°C, insbesondere zwischen 65°C und 75°C, erhitzt werden. Innerhalb dieses Temperaturbereichs wird die Dauer des Erhitzens so eingestellt, daß nicht mehr als 10% der Proteine denaturiert, d.h. bei einem pH-Wert von 4,6 unlöslich werden. Anschließend erfolgt eine Konzentrierung der denaturierten Proteine, so daß eine Dispersion nicht-aggregierter, makrokolloidaler Partikel mit Durchmessern von 0,1 bis 10 µm entsteht.

Unter ähnlichen Erhitzungsbedingungen (60°C bis 80°C) kann nach HAKAART et al. (EP-A 0 412 590) aus Molke mit einem Proteingehalt von weniger als 8% oder einer mit α-Lactalbumin angereicherten Fraktion bei gleichzeitiger Anwendung von geringen Schereinwirkungen eine Nahrungsmittelzusammensetzung mit erhöhtem Gehalt an α-Lactalbumin hergestellt werden. Die nicht-aggregierten mikrokolloidalen Teilchen, die bei diesem Verfahren erhalten werden, weisen eine mittlere Teilchengröße im Bereich von 0,1 bis 10 µm auf.

WO-A 92/20239 [ASHER et al.] beschreibt ein Verfahren zur Herstellung eines Fettersatzstoffs für die Verwendung bei der Eiskremherstellung, bei dem durch Ultrafiltration von Molke ein Molkenkonzentrat (WPC) und durch sich anschließende kurzzeitige Erhitzung des erhaltenen Molkenkonzentrates auf zwischen 75°C und 85°C die Molkenproteine partiell denaturiert werden. Diese Behandlung führt zu einem Produkt koagulierter Teilchen nicht näher definierte Größe. Werden die Bedingungen der Denaturierung verschärft, um einen höheren Grad an Denaturierung zu erzielen, so erhält man bei diesem bekannten Verfahren ein Produkt mit größeren, leicht unterscheidbaren Teilchen, die es für die Verwendung bei der Eiskremherstellung völlig ungeeignet machen.

Eine nachträgliche mechanische Behandlung von hitzedenaturierten Molkenproteinen, insbesondere eine hohe Scherung, kann ebenfalls zu Aggregatgrößen im Mikrometerbereich führen: In einem von PAQUIN et al. [PAQUIN, P.; LEBEUF, Y.; RICHARD, J.P.; KALAB, M. "Microparticulation of milk proteins by high pressure homogenization to produce a fat substitute" in: IDF Special Issue 9303: Protein & Fat Globule Modifications, 389-396 (1993)] entwickelten Verfahren wird ultra- und diafiltrierte Molke zunächst im neutralen oder sauren pH-Bereich bei 95°C für 5 min erhitzt. Dadurch erfolgt eine etwa 90 %ige Denaturierung und Aggregation der Molkenproteine. Das erhitzte Konzentrat wird anschließend in einem speziellen Hochdruckhomogenisator, einem sogenannten Mikrofluidizer, bei einem Druck von 750 bar homogenisiert. Die grob aggregierte Struktur wird durch diese Behandlung in kleine, kugelförmige Partikel von etwa 1 bis 10 um Durchmesser zerschlagen.

Vergleichbare Partikelgrößen wurden von SPIEGEL, T., KESSLER, H.G. ["Continuous formation of gel structures and stable foams based on a heat treated and acidulated whey protein concentrate" in Texture of Fermented Milk Products and Dairy Desserts, Proceedings of the IDF Symposium in Vicenza, 106-114, (1998)] gefunden, wenn ein Molkenkonzentrat mit 10 % Protein und 13 % Laktose bei 80°C erhitzt und während der anschließenden Kühlung in einem Schabewärmetauscher einer intensiven Scherbehandlung unterzogen wurde.

Diesen bekannten Verfahren ist gemeinsam, daß die Ausbeute an Proteinaggregaten in der gewünschten Größe von etwa 0,1 bis 10 um gering ist. Außerdem sind diese Verfahren großenteils kompliziert und aufwendig und deshalb für die industrielle Anwendung uninteressant.

Aufgabe der Erfindung ist es daher, ein Verfahren zur Herstellung von denaturierten Molkenproteinaggregaten, bevorzugt mit einer Größe von im wesentlichen 0,1 µm bis 10 um [mittlere Aggregatgröße (Medianwert) im Bereich von 1 bis 4 um] bereitzustellen, das einfach durchzuführen ist und die gewünschten Proteinaggregate zuverlässig und in hoher Ausbeute bereitzustellen vermag.

Diese Aufgabe wird durch ein Verfahren zur Herstellung eines Konzentrats denaturierter Molkenproteinaggregate, bevorzugt mit einer mittleren Aggregatgröße (Medianwert) im Bereich von 1 bis 4 um gelöst, welches die Schritte umfasst, daß

a) eine auf einen Proteingehalt von maximal 3 Gew.-% angereicherte wäßrige Lösung mit Molkenproteinen mit einem pH im Bereich von 5,0 bis 7,0 unter im wesentlichen nicht-scherenden Bedingungen bei einer Temperatur im Bereich von 75 bis 150°C mittels Heißhaltung zu >90%, bezogen auf die Proteine, hitzedenaturiert wird und daß

b) anschließend ein Konzentrierungsschritt durchgeführt wird, bevorzugt auf eine Konzentration der denaturierten Molkenproteine zwischen 5 und 20%.

Der vorstehend gebrauchte Ausdruck, daß die mittlere Aggregatgröße (Medianwert) zwischen 1 und 4 um liegt, bedeutet, daß im wesentlichen die Aggregatgröße zwischen 0,1 und 10 um liegen soll; hierbei ist der Medianwert so definiert, daß bei einer gegebenen Größenverteilung 50 Vol.-% der Teilchen unterhalb dieses Wertes liegen und 50 Vol.-% oberhalb davon. Dieser Medianwert wird in Fachkreisen auch mit $D_{50.3}$ abgekürzt. Wenn dann die Aggregatgröße "im wesentlichen" zwischen 0,1 und 10 µm liegen soll, so ist dies so zu verstehen, daß mehr als 90 Vol.-%, bevorzugt mehr als 95 Vol.-% der Aggregate in dem genannten Größenbereich zwischen 0,1 und 10 µm liegen.

Das erfindungsgemäße Herstellungsverfahren erfordert keine oder nur geringe Schereinwirkungen, so daß keine aufwendigen Apparaturen notwendig sind.

Wesentliches Merkmal des erfindungsgemäßen Verfahrens ist, daß mit dem Ausgangsrohstoff in dem erfindungsgemäß eingesetzten Temperaturintervall von 75 bis 150°C mittels Heißhaltung bei einem pH im Bereich von 5,0 bis 7,0 unter im wesentlichen nicht-scherenden Bedingungen eine kontrollierte Denaturierung durchgeführt wird.

Insbesondere liegt der erfindungsgemäß bei der Verfahrensführung einzustellende Denaturierungsgrad bei ≥ 90%, bevorzugt ≥ 95%. Die gezielte Steuerung des erfindungsgemäßen Verfahrens durch die Einstellung des Denaturierungsgrades stellt den wesentlichen Unterschied zwischen dem erfindungsgemäßen Verfahren und den dem Fachmann bekannten Verfahren dar. Dadurch wird gewährleistet, daß die Ausbeute an denaturierten Molkenproteinaggregaten außerordentlich hoch ist, so daß annähernd das gesamte enthaltene Protein zur Erzielung der gewünschten Eigenschaften beitragen kann.

Wird die Hitzedenaturierung nicht kontrolliert durchgeführt, so bewirken bereits kleinste Schwankungen in der Zusammensetzung der Ausgangsmaterialien, wie etwa unterschiedliche Gehalte an den in der Ausgangslösung, etwa Milch oder Molke, enthaltenen Proteinfraktionen, im pH-Wert der Ausgangslösung und ähnlichem, daß der gewünschte Gehalt an denaturierten (Molken-)Proteinaggregaten nicht erzielt wird. Infolgedessen weist dann das erhaltene Produkt auch nicht die gewünschten Eigenschaften auf und kann nicht zu dem vorgesehenen Zweck eingesetzt werden.

Der Anteil der denaturierten Proteine wird bei dem erfindungsgemäßen Verfahren mittels des bei den Beispielen beschriebenen Verfahrens erfaßt; es handelt sich dabei um einen Routinetest, wie er in vielen Labors im Zusammenhang mit anderen Untersuchungen durchgeführt wird. Details der Messung des Denaturierungsgrades sind also in den nachfolgenden Beispielen näher beschrieben.

Der so gemessene Denaturierungsgrad stellt einen einfach zu messenden Parameter dar, der es dem Fachmann ermöglicht, mittels des erfindungsgemäßen Verfahrens die gestellte Aufgabe zu lösen.

Bei dem erfindungsgemäßen Verfahren kann als Ausgangsstoff eine beliebige wäßrige Lösung von Molkenproteinen eingesetzt werden, beispielweise Molke, Molke aus der Kaseinherstellung. Bevorzugt wird jedoch als Rohstoff ein Milch-Mikrofiltrationspermeat oder direkt eine nicht-angereicherte Molke, insbesondere Süßmolke verwendet. Der Proteingehalt der eingesetzten Lösung übersteigt erfindungsgemäß nicht 3 Gew.-%. Es ist erfindungsgemäß also nicht erforderlich, vor der Durchführung des erfindungsgemäßen Denaturierungsverfahrens ein Proteinkonzentrat, beispielsweise ein WPC (whey protein concentrate) herzustellen. Der erfindungsgemäß bevorzugte Rohstoff ist — wie bereits angedeutet — nicht-konzentrierte Molke, bevorzugt Süßmolke, die einen Anteil an denaturierbaren Molkenproteinen im Konzentrationsbereich zwischen 0,5 und etwa 1 Gew.-% enthält. In Ausnahmefällen kann der Gehalt einer derartigen Molke bis zu 1,2 Gew.-% betragen. Der Laktosegehalt einer derartigen Molke liegt zwischen 4 bis 6 Gew.-%.

Erfindungsgemäß beträgt der pH-Wert des Ausgangsmaterials 5 bis 7, bevorzugt zwischen 5,5 und 6,5. Am allerbevorzugtesten ist ein Bereich von etwa 6, insbesondere 6,0 bis 6,5. Dies bietet den Vorteil, daß Molke aus der Käseherstellung in unveränderter Form verwendet werden kann. Dabei kann jedoch auch Molke als Rohstoff dienen, deren Proteingehalt durch molkereiübliche Konzentrierungsverfahren auf maximal 3 Gew.-% erhöht ist.

Die bei einer bestimmten Temperatur im zuvor genannten Bereich anzuwendende Heißhaltezeit zur Erzielung einer Molkenproteindenaturierung über 80 %, bevorzugt über 95 %, liegt zwischen 18 Stunden und 10 Sekunden. Allgemein gültige Zeitgrenzen lassen sich nur schwer festlegen, da diese je nach Zusammensetzung des Ausgangsmaterials stark voneinander differieren können (vgl. DANNENBERG und KESSLER ["Reaction Kinetics of the Denaturation of Whey Proteins in Milk", J. Food Sci. 53(1), 258 - 263 (1988)], wo die Ergebnisse spezieller Untersuchungen an einzelnen Molkenproteinfraktionen wiedergegeben sind). Die bei der Durchführung des erfindungsgemäßen Verfahrens erforderliche Heißhaltezeit ergibt sich jedoch aus dem einzuhaltenden Denaturierungsgrad.

Das erfindungsgemäße Verfahren kann mittels molkereiüblicher Vorrichtungen wie Platten- oder Röhrenwärmetauschern bzw. Behältern durchgeführt werden. Bei diesen Verfahren treten üblicherweise Scherkräfte durch Pump- und Rührvorgänge auf. Erfindungsgemäß und im Unterschied zu den dem Fachmann bekannten Verfahren werden jedoch keine weiteren Scherungsvorgänge durchgeführt. Insofern wird das erfindungsgemäße Verfahren unter im wesentlichen nicht-scherenden Bedingungen durchgeführt. Die durch die erwähnten, nicht zu vermeidenden Pump- und Rührvorgänge auftretenden Scherraten liegen im allgemeinen nicht oberhalb von 2000 s$^{-1}$ bis 1000 s$^{-1}$, bevorzugt nicht oberhalb 500 s$^{-1}$. Die Heißhaltung des Rohstoffs kann auch in vollständiger Ruhe erfolgen.

Erfindungsgemäß erfolgt die Hitzedenaturierung des Ausgangsmaterials, d.h. insbesondere der nicht-angereicherten Molke, in einem Temperaturbereich zwischen 75°C und 150°C. Besonders bevorzugt sind jedoch die Temperaturbereiche zwischen 110°C und 150°C und zwischen 75°C und 95°C, insbesondere 75°C und 85°C. Nach der erfindungsgemäßen Hitzebehandlung ist das Produkt trüb, aber weiterhin flüssig.

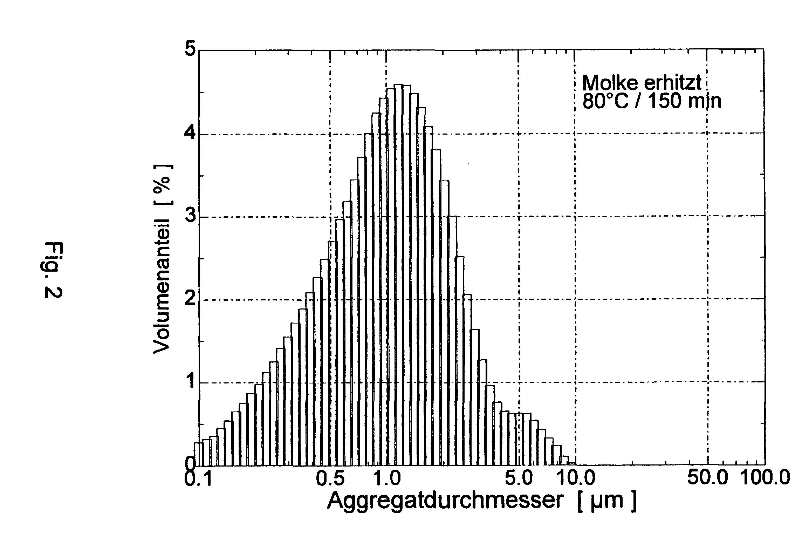

Die Molkenproteine liegen überwiegend als Aggregate vor. Die Messung mittels eines Laserbeugungsspektrometers (Coulter LS 130) ergibt in dem erfindungsgemäßen Größenbereich von 0,1 μm bis 10 μm einen Volumenanteil von >90% der Aggregate und im bevorzugten Größenbereich von 0,5 bis 4 μm einen Volumenanteil von >70% (vgl. Fig. 2).

Der Erhitzung folgt erfindungsgemäß eine Konzentrierung mit molkereiüblichen Verfahren, vorzugsweise durch Ultrafiltration oder Mikrofiltration, auf einen Proteingehalt von 5 % bis 20 %. Nach der Konzentrierung ist das Produkt viskos und weist eine kremig-glatte Konsistenz auf. Die Aggregatdurchmesser werden durch diesen Schritt nicht wesentlich verändert. Besonderer Vorteil der nahezu vollständigen Denaturierung und Aggregation der Molkenproteine vor dem anschließenden Konzentrierungsschritt ist es, daß keine Abtrennung von nicht-denaturierten Anteilen zur Ausbeutesteigerung notwendig ist.

Das so hergestellte Produkt kann direkt verwendet werden, alternativ kann es aber auch getrocknet werden, vorzugsweise durch Gefrier- oder Sprühtrocknung.

Das erfindungsgemäß hergestellte Produkt kann der Käsereimilch zur Herstellung von Weich-, Schnitt- und Hartkäse zugesetzt werden, um den Molkenproteingehalt in diesen Käsen und die Ausbeute zu erhöhen. In der denaturierten und aggregierten Form verbleiben die Molkenproteine in der Käsemasse und gehen im Gegensatz zu nativen Molkenproteinen nicht in die Molke verloren, wie bei der klassischen Käseherstellung üblich.

Ebenso ist ein Einsatz in Schmelzkäse, in gefrorenen und nichtgefrorenen Desserts, in Frischkäse oder in Aufstrichen möglich. Bei allen diesen Produkten kann durch Zusatz des erfindungsgemäß hergestellten Molkenproteinproduktes der Fettgehalt wegen der kremigen Eigenschaften reduziert werden. Außerdem kann der Kaseinanteil, der z.B. in Form von Käserohstoff oder Magermilchpulver in diesen Produkten vorliegt, teilweise ersetzt werden, da sich denaturierte, aggregierte Molkenproteine ähnlich wie Kasein verhalten.

In einer weiteren ganz besonders bevorzugten Ausführungsform des erfindungsgemäßen Verfahrens wird das nach der Durchführung der Konzentrierung erhaltene Produkt unter Einstellung eines pH von 4,0 bis 5,5 unter Einsatz einer Aufschäumvorrichtung aufgeschäumt. Bei der Durchführung dieses Verfahrensschritts ist die Zugabe von Schaumstabilisatoren nicht erforderlich. Wenn überhaupt Schaumstabilisatoren zugesetzt werden, was eventuell zur weiteren Optimierung der Schaumstruktur wünschenswert sein kann, so ist die eingesetzte Menge an Schaumstabilisatoren, gegenüber üblichen Verfahren zur Herstellung geschäumter Produkte wesentlich reduziert. Im Falle von Gelatine beispielsweise sind anstelle der üblicherweise zugesetzten 0,5% bis 1% Gelatine nur noch etwa 0,1% notwendig.

Die Einstellung des pH erfolgt durch die kontrollierte Zugabe einer Säure. Bei der zugesetzten Säure handelt es sich erfindungsgemäß um eine Säure aus der Gruppe der organischen bzw. für Lebensmittel zugelassenen Säuren. Bevorzugt ist ein Gemisch aus Milchsäure und Zitronensäure, im bevorzugtesten Fall ein Gemisch aus 4 mol/l Zitronensäure und 90%iger Milchsäure zu gleichen Teilen.

Nach Durchführung des Aufschäumens erhält man ein geschäumtes, im wesentlichen oder sogar völlig schaumstabilisatorfreies Produkt. Gegenüber üblichen geschäumten Produkten zeichnet sich das erfindungsgemäße Produkt dadurch aus, daß es im geschäumten Zustand — je nach Lagerungsbedingungen — wochen- oder sogar monatelang physikalisch stabil lagerfähig ist. Übliche aus Molkenproteinaggregaten hergestellte Produkte erzielen, wenn überhaupt, eine derartige Lagerfähigkeit nur durch Zusatz von Schaumstabilisatoren.

Die Erfindung in allen ihren Ausführungsformen wird durch die nachfolgend wiedergegebenen Beispiele näher erläutert.

Es zeigen die Fig.:

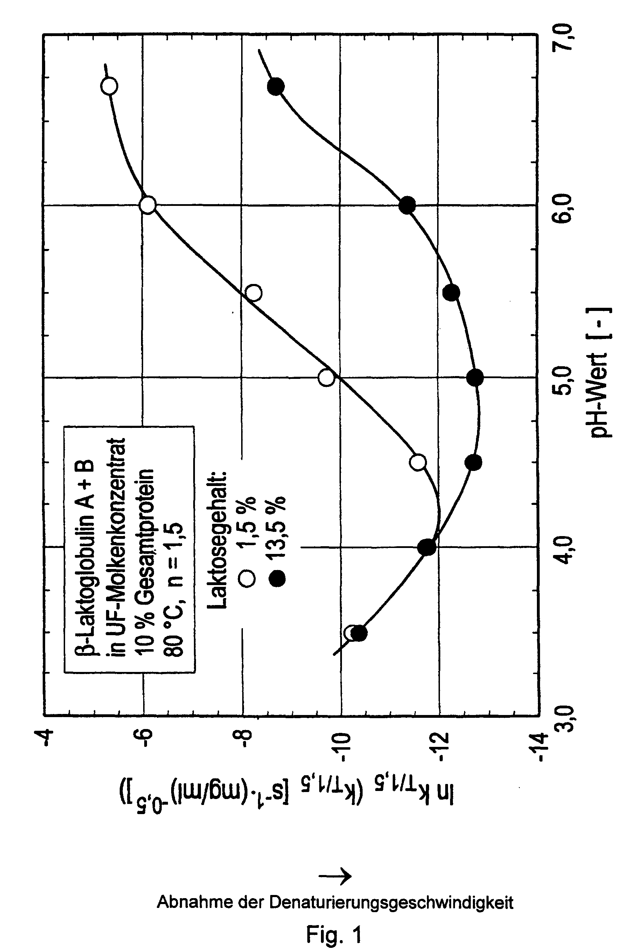

Fig. 1 zeigt die Abhängigkeit der Geschwindigkeitskonstanten der Denaturierung von β-Lactoglobulin vom pH-Wert, d.h. die Änderung der jeweiligen Denaturierungsgeschwindigkeit.

Fig. 2 zeigt beispielhaft die Häufigkeitsverteilung (Volumenanteil vs. Teilchendurchmesser) der mittels des erfindungsgemäßen Verfahrens hergestellten Molkenproteinaggregate. Der dem Diagramm entnehmbare aufsummierte Anteil (Vol.-%) der Größenklassen ist:

| aufsummierter Anteil (Vol.-%) | < 10 | < 25 | < 50 | <75 | < 95 |
|---|---|---|---|---|---|
| Größe (bis zu ... μm) | 0,32 | 0,59 | 1,1 | 1,8 | 3,8 |

**Herstellungsbeispiele**

Beispiel 1

Eine übliche, d.h. nicht aufkonzentrierte Molke mit einem Proteingehalt von 1,0 % und einem pH-Wert von 6,50 wurde in einem Plattenwärmeaustauscher aufgeheizt und dann in einem Tank bei 80°C 150 Minuten lang einer Heißhaltung unterzogen. Anschließend wurde der Denaturierungsgrad gemäß folgendem Verfahren gemessen:

Die Bestimmung der Konzentrationsabnahme der nativen Molkenproteine infolge der Erhitzung erfolgte nach der bei BEYER ["Zum Einfluß der Proteinkonzentration auf das Denaturierungsverhalten der Molkenproteine sowie die damit verbundenen rheologischen Veränderungen", Dissertation Fakultät für Brauwesen, Lebensmitteltechnologie und Milchwissenschaft, Technische Universität München, München (1990)] beschriebenen chromatographischen Methode [RP-HPLC: Umkehrphasen-Hochleistungsflüssigkeitschromatographie]. Dabei werden die denaturierten Molkenproteine vor der Analyse durch Fällung bei pH 4,6 und anschließende Filtration abgetrennt. Die einzelnen nativen Molkenproteinfraktionen werden aufgrund unterschiedlicher hydrophober Eigenschaften an der stationären Trägersubstanz der HPLC-Säule verschieden stark adsorbiert. Mittels Gradientenelution, d.h. durch kontinuierliche Veränderung der hydrophoben Eigenschaften der mobilen Phase, die die Säule durchspült, erfolgt eine schrittweise Desorption der Proteinfraktionen von der stationären Phase. Dadurch eluieren die Fraktionen zu unterschiedlichen Zeiten und können getrennt mit einem UV-Detektor erfaßt werden. Die Signale werden in eine Chromatogrammdarstellung umgewandelt, in der die Fläche unter den einzelnen Peaks der Proteinkonzentration proportional ist. Der Denaturierungsgrad wird über das Verhältnis der Peakflächen der hitzebehandelten und der nicht erhitzten Probe unter Berücksichtigung der Gesamtverdünnungsfaktors bei der Probenaufbereitung berechnet:

$$DG = 1 - \frac{(F \cdot GVF)_{erhitzt}}{(F \cdot GVF)_{nicht\ erhitzt}}$$

wobei:

DG: Denaturierungsgrad,
F: Peakfläche,
GVF: Gesamtverdünnungsfaktor der Probenaufbereitung sind.

Der in diesem Beispiel derartig ermittelte Denaturierungsgrad betrug für β-Lactoglobulin 95 % und für α-Lactalbumin > 95 %, Gesamtdenaturierungsgrad 95 %.

Beispiel 2

Herstellungsbeispiel 1 wurde mit einer nicht-konzentrierten Molke mit einem Proteingehalt von 0,9 %, pH 6,55 wiederholt, wobei die Erhitzung und die Heißhaltung in einem Röhrenwärmeaustauscher in kontinuierlichem Betrieb im Durchfluß bei 140°C 10 Sekunden lang erfolgte.

Der in diesem Beispiel ermittelte Denaturierungsgrad betrug für β-Lactoglobulin 95 % und für α-Lactalbumin 80 %, Gesamtdenaturierungsgrad >85%.

Beispiel 3

Herstellungsbeispiel 1 wurde mit einer leicht aufkonzentrierten Molke (Proteingehalt 2,0 Gew.-%, pH 5,0) wiederholt, wobei die Erhitzung und die Heißhaltung in einem Druckbehälter bei 110°C 1 Minute lang erfolgte.

Der in diesem Beispiel ermittelte Denaturierungsgrad betrug für β-Lactoglobulin > 95 % und für α-Lactalbumin > 95 %, Gesamtdenaturierungsgrad >95 %.

**Anwendungsbeispiele**

Anwendungsbeispiel 1: Schmelzkäse/Schmelzkäsezubereitungen

Ein Schmelzkäse mit hohem Molkenproteinanteil wurde nach folgender Rezeptur hergestellt:

|  | Anteil | Proteingehalt |
|---|---|---|
| Hartkäse/Schnittkäse | 58 % | 24 % |
| hergestelltes Molkenkonzentrat | 17,5 % | 10 % |
| Schmelzsalz | 3 % | |
| Butter | 9 % | |
| Wasser | 12.5 % | |
|  | 100 % | |

Der so hergestellte Schmelzkäse zeigte hervorragendes Kremierungsverhalten und eine ebenso gute Streichfähigkeit.

Anwendungsbeispiel 2: Milchspeiseeis

Speiseeismix folgender Zusammensetzung wurde nach Pasteurisierung und Homogenisierung gefroren. Die Zugabe des erfindungsgemäß hergestellten Molkenproteinproduktes kann wegen dessen hohen Denaturierungsgrades und der damit verbundenen hohen Hitze- und Scherstabilität vor dem Pasteurisieren und Homogenisieren erfolgen.

|  | Anteil | Proteingehalt |
|---|---|---|
| Magermilchpulver | 5,5 % | 35 % |
| erfindungsgemäß hergestelltes Molkenproteinpulver | 5,5 % | 35 % |
| Milchfett | 5 % | |
| Glucosesirup | 5 % | |
| Saccharose | 10 % | |
| Wasser | 69 % | |

Das so hergestellte Speiseeis zeigte eine kremiges Mundgefühl und eine sehr gute Schmelzstabilität, auch ohne Zugabe von Emulgatoren/Stabilisatoren.

Anwendungsbeispiel 3: Schaumspeise

Eine lagerstabile Schaumspeise wurde durch Aufschäumen des erfindungsgemäß hergestellten Molkenprodukts (10% Protein) und gleichzeitiger Säuerung mittels Milchsäure (90%ig) auf pH 4,5 hergestellt. Der Schaum war ohne jede Zugabe von Stabilisatoren oder milchfremder Zutaten über mehrere Wochen physikalisch stabil. Aus sensorischen Gründen kann auch Zucker und Aroma/Fruchtkonzentrat Bestandteil der Rezeptur sein.

**Patentansprüche**

1. Verfahren zur Herstellung eines Konzentrats denaturierter Molkenproteinaggregate, wobei das Verfahren im Wesentlichen aus den Schritten besteht, daß

   a) eine wässrige Molkenproteinlösung mit einem Molkenproteingehalt von maximal 3 Gew.-% bei einem pH im Bereich von 5,0 bis 7,0 unter im wesentlichen nicht-scherenden Bedingungen bei einer Temperatur im Bereich von 75 bis 150°C mittels Heißhaltung so hitzedenaturiert wird, daß > 90% der Molkenproteine zu Molkenproteinaggregaten mit einer mittleren Aggregatgröße (Medianwert) im Bereich von 1 bis 4 μm hitzedenaturiert werden, und daß

   b) anschließend ein Konzentrierungsschritt durchgeführt wird.

2. Verfahren nach Anspruch 1, wobei die wässrige Lösung mit Molkenproteinen ausgewählt ist aus einem Milch-Mikrofiltrationspermeat und einer Molke.

3. Verfahren nach einem der vorhergehenden Ansprüche, wobei bei der Durchführung der im wesentlichen nicht-scherenden Bedingungen der Heißhaltung ein Wert für die Scherrate von 2000 s$^{-1}$, bevorzugt 1000 s$^{-1}$ nicht überschritten wird.

4. Verfahren nach einem der vorhergehenden Ansprüche, wobei die wässrige Lösung eine nicht-angereicherte Molke ist.

5. Verfahren nach einem der vorhergehenden Ansprüche, wobei der pH der wässrigen Lösung zwischen 5,5 und 6,5, bevorzugt zwischen 6,0 und 6,5 liegt.

6. Verfahren nach einem der vorhergehenden Ansprüche, wobei die Heißhaltezeit zwischen 10 Sekunden und 18 Stunden liegt.

7. Verfahren nach einem der vorhergehenden Ansprüche, wobei die Temperatur beim Heißhaltungsschritt ≤ 95°C beträgt.

8. Verfahren nach einem der vorhergehenden Ansprüche, wobei die Temperatur beim Heißhaltungsschritt zwischen 110°C und 150°C beträgt.

9. Verfahren nach einem der vorhergehenden Ansprüche, wobei bei dem Konzentrierungsschritt eine Ultrafiltrationsvorrichtung, eine Mikrofiltrationsvorrichtung, ein Separator und/oder ein Dekanter eingesetzt wird.

10. Verfahren zur Herstellung eines geschäumten Produkts, enthaltend denaturierte Molkenproteinaggregate mit einer mittleren Aggregatgröße (Medianwert) im Bereich von 1 bis 4 μm, wobei

    - das Verfahren nach einem der Ansprüche 1 bis 9 durchgeführt wird,

    - das so erhaltene Konzentrat unter Einstellung eines pH von 4,0 bis 5,5 ohne Zugabe von Schaumstabilisatoren aufgeschäumt wird.

11. Geschäumtes schaumstabilisatorfreies Produkt, erhältlich mittels des Verfahrens nach Anspruch 10.

**Claims**

1. A process for producing a concentrate of denatured whey protein aggregates, the process essentially consisting of the steps that

   a) an aqueous whey protein solution having a whey protein content of at most 3% by weight is heat-denatured by hot-holding a temperature in the range from 75 to 150°C, at a pH in the range from 5.0 to 7.0 under essentially non-shearing conditions in such a manner that ≥90% of the whey protein are heat-denatured to form whey protein aggregates having a mean aggregate size (median) in the range from 1 to 4 μ*m*, and that

b) a concentrated step is then carried out.

2. The process as claimed in claim 1, wherein the aqueous solution containing whey proteins is selected from a milk microfiltration permeate and a whey.

3. The process as claimed in one of the preceding claims, wherein, when the hot-holding under essentially non-shearing conditions is carried out, a value for the shearing rate of 2000 s$^{-1}$, preferably 1000 s$^{-1}$, is not exceeded.

4. The process as claimed in one of the preceding claims, wherein the aqueous solution is a non-enriched whey.

5. The process as claimed in one of the preceding claims, wherein the pH of the aqueous solution is between 5.5 and 6.5, preferably between 6.0 and 6.5.

6. The process as claimed in one of the preceding claims, wherein the hot-holding time is between 10 seconds and 18 hours.

7. The process as claimed in one of the preceding claims, wherein the temperature during the hot-holding step is ≤95°C.

8. The process as claimed in one of the preceding claims, wherein the temperature during the hot-holding step is between 110°C and 150°C.

9. The process as claimed in one of the preceding claims, wherein, in the concentration step, an ultrafiltration apparatus, a microfiltration apparatus, a separator and/or a decanter is used.

10. A process for producing a foamed product comprising denatured whey protein aggregates, having a mean aggregate size (median) in the range from 1 to 4 μ$m$, in which

   - the process as claimed in one of the claims 1 to 9 is carried out,

   - the resultant concentrate is foamed without addition of foam stabilizers with a pH of 4.0 to 5.5 being set.

11. A foamed foam-stabilizer-free product, obtainable by means of the process as claimed in claim 10.

**Revendications**

1. Procédé de production d'un concentré d'agrégat de protéines de lactosérum dénaturées, le procédé comprenant pour l'essentiel les étapes selon lesquelles :

   a) une solution de protéine de lactosérum aqueuse ayant une teneur en protéines de lactosérum d'au maximum 3 % en poids à un pH dans la zone de 5,0 à 7,0, dans des conditions essentiellement non cisaillantes, est dénaturée par la chaleur à l'aide d'un maintien à une température de 75 à 150°C de sorte que > 90 % des protéines de lactosérum sont dénaturées par la chaleur en agrégats de protéines de lactosérum ayant une taille d'agrégat moyenne (valeur médiane), dans la zone de 1 à 4 μm, et

   b) ensuite une étape de concentration est effectuée.

2. Procédé selon la revendication 1, dans lequel la solution aqueuse contenant des protéines de lactosérum, est choisie parmi un perméat de micro-filtration du lait et un lactosérum.

3. Procédé selon l'une des revendications précédentes, dans lequel lors de l'exécution des conditions essentiellement non cisaillantes du maintien à la chaleur, on ne dépasse pas une valeur pour la vitesse de cisaillement de 2000 s$^{-1}$, de préférence de 1000 s$^{-1}$.

4. Procédé selon l'une des revendications précédentes, dans lequel la solution aqueuse est un lactosérum non enrichi.

5. Procédé selon l'une des revendications précédentes, dans lequel le pH de la solution aqueuse se situe entre 5,5 et 6,5, de préférence entre 6,0 et 6,5.

6. Procédé selon l'une des revendications précédentes, dans lequel le temps de maintien à chaud se situe entre 10 secondes et 18 heures.

7. Procédé selon l'une des revendications précédentes, dans lequel lors de l'étape de maintien à la chaleur la température est ≤ 95°C.

8. Procédé selon l'une des revendications précédentes, dans lequel lors de l'étape de maintien à la chaleur la température est 110°C et 150°C.

9. Procédé selon l'une des revendications précédentes, dans lequel lors de l'étape de concentration on met en oeuvre un dispositif d'ultrafiltration, un dispositif de micro filtration, un séparateur et/ou un décanteur.

10. Procédé de production d'un produit mis en mousse, contenant des agrégats de protéines de lactosérum dénaturées ayant une taille moyenne d'agrégats (valeur médiane) dans la zone de 1 à 4 µm, dans lequel :

    - le procédé est exécuté selon l'une des revendications 1 à 9,

    - le concentré ainsi obtenu est converti en mousse en ajustant le pH de 4,0 à 5,5 sans ajout d'un agent stabilisant la mousse.

11. Produit exempt d'agent stabilisant de la mousse, converti en mousse, accessible à l'aide du procédé selon la revendication 10.

β-Laktoglobulin A + B
in UF-Molkenkonzentrat
10 % Gesamtprotein
80 °C,  n = 1,5

Laktosegehalt:
○    1,5 %
●    13,5 %

Abnahme der Denaturierungsgeschwindigkeit

Fig. 1

EP 1 154 700 B1

Fig. 2